**Europäisches Patentamt**

**European Patent Office**

**Office européen des brevets**

(11) Publication number: **0 046 078**

**A1**

# EUROPEAN PATENT APPLICATION

(21) Application number: **81303627.4**

(22) Date of filing: **07.08.81**

(51) Int. Cl.³: **C 02 F 5/08**
**C 02 F 5/04, C 02 F 5/06**

(30) Priority: **12.08.80 US 177346**

(43) Date of publication of application:
**17.02.82 Bulletin 82 7**

(84) Designated Contracting States:
**AT BE CH DE FR GB IT LI LU NL SE**

(71) Applicant: CALGON CORPORATION
Route 60-Campbell's Run Road
Robinson Township Pennsylvania 15205(US)

(72) Inventor: Ralston, Paul H.
29 Santa Fe Drive
Bethel Park Pennsylvania 15102(US)

(72) Inventor: McKay, Sandra L.
Union Avenue Extension
Oakdale Pennsylvania 15071(US)

(74) Representative: Crampton, Keith John Allen et al,
D YOUNG & CO 10 Staple Inn
London WC1V 7RD(GB)

(54) Inhibition of scale deposition.

(57) Glassy polyphosphates are used as threshold scale inhibitors in strongly acid waters. The content of glassy polyphosphate is 0.1 to 500 mg/l of water.

EP 0 046 078 A1

Croydon Printing Company Ltd.

"INHIBITION OF SCALE DEPOSITION"


This invention relates to methods of inhibiting scale formation.

More particularly, this invention relates to the use of inorganic polyphosphates as threshold inhibitors of scale formation in strongly acid waters.

Most industrial waters contain alkaline earth metal cations such as calcium, barium, magnesium, etc. and several anions such as bicarbonate, carbonate, sulfate, oxalate, phosphate, silicate, fluoride, etc. When combinations of these anions and cations are present in concentrations which exceed the solubility of their reaction products, precipitates form until these product solubility concentrations are no longer exceeded. For example, when the concentrations of calcium ion and sulfate ion exceed the solubility of the calcium sulfate reaction products, a solid phase of calcium sulfate will form.

As these reaction products precipitate on surfaces of the water-carrying system, they form scale or deposits. This accumulation prevents effective heat transfer, interferes with fluid flow, facilitates corrosive processes and harbors bacteria. Thi scale is an expensive problem in many industrial water systems, causing delays and shutdowns for cleaning and removal.

Scale-forming compounds can be prevented from precipitating by inactivating their cations with chelating or sequestering agents so that the solubility product of their reaction products is not exceeded. Generally, this requires many times as much chelating or sequestering agent as cation, and these amounts are not always desirable or economical

The scale control process described herein is not based on sequestration or chelation which requir stoichiometric or greater concentrations of inhibitc On the other hand, our inhibitors are effective at concentrations many times less than stoichiometric (mole:mole) relationships and will be referred to as threshold inhibitor concentrations. These concentra tions, in the low milligrams/liter range, are effec tive through the control of crystal nucleation and crystal growth, and the inhibition will be called threshold scale inhibition.

3

It is well known that many of the conventional threshold scale inhibitors are markedly less effective in acid waters than they are in neutral or alkaline waters. The low molecular weight polyacrylate is half as effective at pH 4.0 as it is at pH 6.5 and aminotris(methylenephosphonic acid) shows an even greater weakness under the same conditions. Similarly, hydroxyethylidene diphosphonic acid is a poor threshold inhibitor for calcium sulfate scale in neutral waters, but is very effective in highly alkaline waters.

It is, therefore, apparent that there is a need for an effective threshold inhibitor that is effective in strongly acid waters having solution pH values below 4, preferably below 2. These conditions are often found in applications involving gas scrubbers, evaporators and process liquids.

The present invention provides a method for inhibiting the precipitation of scale-forming salts in a strongly acidic aqueous system which comprises adding to the aqueous system from 0.1 to 500 mg/l of a glassy polyphosphate.

The glassy polyphosphates having molar ratios of metal oxide:phosphorus pentoxide $(MO:P_2O_5)$ of about 1:1 to 2:1 are especially effective threshold scale inhibitors in strongly acid waters. The metal oxide may be any individual metal oxide or mixture of metal oxides which will yield the desired solubility of the polyphosphate glass, as for example, $Na_2O$, $CaO$, $ZnO$, $MgO$ or mixtures thereof.

Typical glassy polyphosphates found to be useful in controlling deposits in low pH waters are noted in the following table.

| Inhibitor | Ratio $MO:P_2O_5$ | Metal Oxide (MO) |
|---|---|---|
| CALGON® | 1.1 :1.0 | $Na_2O$ |
| MICROMET® IOG | 1.1 :1.0 | $Na_2O$, CaO, MgO |
| SQ Phosphate | 1.35:1.0 | $Na_2O$ |
| TG-10 | 1.67:1.0 | $Na_2O$, ZnO |

The polyphosphates useful in the present invention should be maintained in the aqueous system being treated at a concentration range of about 0.1 to 500 milligrams/liter, preferably 0.1 to 100 milligrams/liter.

The present invention will be more readily understood upon reference to the following discussion and experiments.

Stagnant flask threshold screening tests were used to determine the effectiveness of inhibitors in the prevention of calcium sulfate ($CaSO_4 \cdot 2H_2O$), barium sulfate ($BaSO_4$) and calcium oxalate ($CaC_2O_4$) scale. The threshold stability measurements were carried out after storage of the uninhibited and inhibited supersaturated solutions at pH 1.4 to 1.6 for 4 hours, 24 hours and longer at 75°F.

The saturation levels of the several scale-forming salts and equilibrium solubilities for the 4-hour and 24-hour storage periods are shown in the following table. Note that the equilibrium solubilities of all of the salts are lower after 24 hours than after 4 hours as the individual solubilities approach equilibrium conditions. This means that supersaturation levels of the scale-forming salts are higher and the equilibrium solubility of these scale-forming salts are lower as the storage
time increases.

| | 4 Hours | | 24 Hours | |
|---|---|---|---|---|
| Scale | Satu-ration | Equi-librium Concen-tration (mg/l) | Satu-ration | Equi-librium Concen-tration (mg/l) |
| $CaSO_4 \cdot 2H_2O$ | 1.2X | 14,590 | 2.7X | 6,380 |
| $BaSO_4$ | 3.6X | 65 | 12.5X | 19 |
| $CaC_2O_4$ | -- | -- | 1.7X | 488 |

In the stagnant flask tests, readily soluble
salt solutions of the scale-forming anion and cation
were mixed in the presence and absence of inhibitor
and maintained as supersaturated solutions at the
desired acidity (pH 1.4 to 1.6) for the stated
storage time. At the end of the test cycle, the
clear supernatant solutions were analyzed for the
scale-forming cation ($Ca^{+2}$, $Ba^{+2}$) via titration
with chelating agent or atomic absorption. When
all the $Ca^{+2}$ or $Ba^{+2}$ introduced into the test was
found, the scale inhibition was judged 100 percent.
The $Ca^{+2}$ or $Ba^{+2}$ concentration found in the test
solution when no inhibitor was present would be
equivalent to the equilibrium concentration and
0 percent scale inhibition. Intermediate concen-
trations of $Ca^{+2}$ or $Ba^{+2}$ represented intermediate
levels of percent scale inhibition.

The percent threshold scale inhibition
exhibited by these typical glassy polyphosphates
in strongly acid waters yielding scale-forming salts is shown in the following tables.

## TABLE I

### $CaSO_4 \cdot 2H_2O$
PERCENT THRESHOLD INHIBITION
24°C  --  pH 1.4 to 1.6

| Inhibitor | Concentration (mg/l) | | | | | | Time (hrs.) |
|---|---|---|---|---|---|---|---|
| | 3 | 5 | 15 | 25 | 50 | 100 | |
| No Inhibitor | 0 | 0 | 0 | 0 | 0 | 0 | -- |
| CALGON® | 100 | 81 | 98 | 86 | -- | --- | 4 |
| | 25 | -- | 97 | 100 | -- | --- | 24 |
| | --- | -- | -- | 90 | -- | --- | 48 |
| | --- | -- | -- | 25 | 48 | 87 | 168 |
| SQ Phosphate | 76 | -- | 81 | 95 | -- | --- | 4 |
| | 13 | -- | 34 | 38 | -- | --- | 24 |

## TABLE II

### $BaSO_4$
PERCENT THRESHOLD INHIBITION
24°C  --  pH 1.4 to 1.6

| Inhibitor | Concentration (mg/l) | | | | | | Time (hrs.) |
|---|---|---|---|---|---|---|---|
| | 1 | 5 | 15 | 25 | 50 | 100 | |
| No Inhibitor | 0 | 0 | 0 | 0 | 0 | 0 | --- |
| CALGON® | 21 | 78 | 86 | 89 | 89 | --- | 4 |
| | 33 | 82 | 91 | 89 | 89 | --- | 24 |
| | 33 | 87 | 87 | 85 | 85 | --- | 48 |
| | 13 | 87 | 87 | -- | 85 | --- | 168 |
| SQ Phosphate | 17 | 67 | 86 | -- | -- | --- | 4 |
| | 18 | 80 | 87 | -- | -- | --- | 24 |
| | 11 | 80 | 87 | -- | -- | --- | 48 |
| | 6 | 66 | 87 | -- | -- | --- | 168 |
| TG-10 | -- | -- | 71 | 78 | 100 | --- | 4 |
| | -- | -- | 28 | 39 | 66 | --- | 24 |

TABLE II
(Continued)

| Inhibitor | Concentration (mg/l) | | | | | Time |
| | 1 | 5 | 15 | 24 | 50 | (hrs.) |
|---|---|---|---|---|---|---|
| MICROMET® IOG | -- | 98 | -- | -- | 100 | 4 |
| | -- | 86 | -- | -- | 100 | 24 |
| | -- | 94 | -- | -- | 100 | 48 |

TABLE III

$CaC_2O_4$

PERCENT THRESHOLD INHIBITION
24°C   -- pH 1.4 to 1.6

| Inhibitor | Concentration (mg/l) | | | | | Time |
| | 1 | 5 | 15 | 50 | 100 | (hrs.) |
|---|---|---|---|---|---|---|
| No Inhibitor | 0 | 0 | 0 | 0 | 0 | --- |
| CALGON® | 100 | 100 | 100 | --- | --- | 24 |
| | 93 | 93 | --- | --- | --- | 48 |
| | 95 | 95 | --- | --- | --- | 120 |
| TG-10 | --- | 33 | 100 | 100 | --- | 24 |
| | --- | --- | --- | 93 | .93 | 48 |
| | --- | --- | --- | 89 | 78 | 120 |
| MICROMET® IOG | --- | --- | 100 | 100 | --- | 24 |
| | --- | --- | 93 | 100 | --- | 48 |
| | --- | --- | 100 | 97 | --- | 120 |

The glassy polyphosphates are also effective threshold inhibitors for scale-forming salts in strongly acid waters and at elevated temperatures. In the following table, experimental data indicate that threshold concentrations of the glassy polyphosphates (CALGON® and SQ Phosphate) effectively control $CaSO_4 \cdot 2H_2O$ at 65°C   and pH 1.4 to 1.6.

## TABLE IV

$CaSO_4 \cdot 2H_2O$
PERCENT THRESHOLD INHIBITION
65°C -- pH 1.4 to 1.6

| Inhibitor | Concentration (mg/l) 25 | Time (hrs.) |
|---|---|---|
| No Inhibitor | 0 | – |
| CALGON® | 92 | 1 |
| | 63 | 4 |
| SQ Phosphate | 61 | 1 |
| | 37 | 4 |

WE CLAIM:

1.  A method for inhibiting the precipitation of scale-forming salts in a strongly acidic aqueous system which comprises adding to the aqueous system from 0.1 to 500 mg/l of a glassy polyphosphate.

2.  A method as in Claim 1 wherein the concentration of polyphosphate is from 0.1 to 100 mg/l.

3.  A method as in Claim 1 wherein the glassy polyphosphate has a mole ratio of metal oxide to phosphorus pentoxide from 1:1 to 2:1.

4.  A method as in Claim 1 wherein the strongly acidic aqueous system has a pH of less than 4.

European Patent Office

**EUROPEAN SEARCH REPORT**

Application number

EP 81303627.4

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| X | US - A - 3 720 505 (VOGEL)<br><br>* Column 1, lines 45-51; column 2, lines 31-46, 53-64 *<br><br>-- | 1-3 | C 02 F 5/08<br><br>C 02 F 5/04<br><br>C 02 F 5/06 |
| X | US - A - 3 432 428 (WIRTH)<br><br>* Column 2, lines 13-21; column 3, lines 1-4, 14-23; column 4, lines 64-72 *<br><br>-- | 1,2 | |
| X | GB - A - 704 768 (ALBRIGHT)<br><br>* Column 1, lines 9-45; column 2, lines 1,2 *<br><br>---- | 1,3 | TECHNICAL FIELDS SEARCHED (Int. Cl.)<br><br>C 02 F |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family. corresponding document

| X | The present search report has been drawn up for all claims | | |
|---|---|---|---|
| Place of search<br>VIENNA | Date of completion of the search<br>09-11-1981 | Examiner<br>WILFLINGER | |

EPO Form 1503.1 06.78